# EUROPEAN PATENT APPLICATION

(11) **EP 4 317 879 A1**
(43) Date of publication of application: **07.02.2024**
(21) Application number: 22382758.5
(22) Date of filing: 04.08.2022
(51) Int. Cl.: F27B 7/08, F27B 7/10, F27B 7/20, F27B 7/34

(54) **METHOD AND ROTARY FURNACE FOR SEPARATING NON-FERROUS METAL FROM SCRAP-METAL**

(71) Applicant: Nippon Gases Euro-Holding, S.L.U., 28020 Madrid (ES)
(72) Inventor: de Diego Rincón, Joaquín, Madrid (ES); De Preter, Arthur Florimond G., Olen (BE); Van Wauwe, Stefan, Olen (BE); Coessens, Wim Michel Maria, Schoten (BE)
(74) Representative: Balder IP Law, S.L.

(57) **Abstract**

The invention relates to a rotary furnace for separating and recovering non-ferrous metals, preferably adapted for recovering metallic zinc in molten state from metallic zinc bearing material such as zinc bearing scraps or chips. The rotary furnace comprises: a rotary and inclined drum and a set of burners for externally heating the drum and for melting metal scrap inside the drum, so that, molten metal would flow towards the output of the drum. The furnace comprises a torch passing through the lower end of the drum, and provided with a burner placed a central region inside the drum, such that a counter flow of flue gases is directed towards the drum's upper end so as to pre-heat the incoming metal scrap. The invention also refers to a method for separating non-ferrous metal from scrap-metal. The invention reduces Total Organic Carbon (TOC) emissions, and improves recovery rate of non-ferrous metal.

## Description

### TECHNICAL FIELD

The invention relates to a rotary melting furnace for separating and recovering non-ferrous metals from scrap-metal. The invention is preferably adapted for recovering metallic zinc in molten state, from metallic zinc bearing material such as zinc bearing scraps or chips.

An object of the invention is the provision of a melting furnace for separating and recovering non-ferrous metals from scrap-metal, that reduces Total Organic Carbon (TOC) emissions.

An additional object of the invention is to provide a melting furnace of the above-mentioned type, that improves recovery rate of zinc, thus, improving recovery efficiency and revenue in recycling zinc.

The invention also refers to a method for separating non-ferrous metal in liquid state from scrap-metal using the rotary furnace.

### STATE OF THE ART

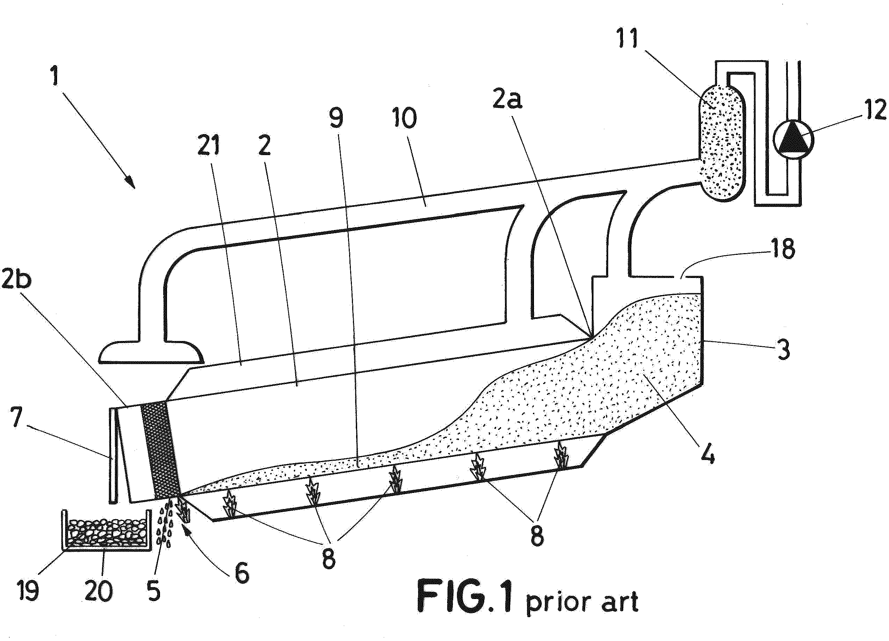

A Coreco type rotary furnace (1) for zinc separation and recovery, is shown in **Figure 1** and comprises: a rotary and inclined drum (2) having an upper end (2a) and a lower end (2b), wherein the lower end (2b) is open for the input of air into the drum and for the output of non-molten metal (19), which is collected in a recipient (20). The upper end (2a) is coupled to a hopper (3) for feeding metal scrap (4) into an upper part of the drum (2), allowing the rotation of the drum relative to the hopper. Scrap metal is introduced into the hopper (3) through an inlet (18).

The drum (2) has an output (5) in the form of a perforated plate, placed at a lower part of the drum (2) for output of molten metal (6), and a door (7) for closing and opening the lower end (2b).

A set of burners (8) are provided for externally heating the drum (2) and for melting metal scrap inside the drum, such that molten metal (9) would flow towards the output (5) of the drum, along with other metal chips that would not melt at the operating temperature of the furnace.

A collection duct (10) is arranged for collecting and evacuating flue gases out of the drum (2), which are circulated through an activated carbon filter (11) and expelled to the environment with the aid of an extraction ventilator (12).

Scrap metal is introduced through the drum's upper end (2a), and then it is heated indirectly through the furnace wall in contact with the scrap, by means of the burners (8) located on the outside of the drum's wall. In contrast, in furnaces with direct heating, the flame is applied directly to the metal scrap, thus, reaching high heating temperatures, that are not suitable for the recovery of zinc.

The drum (2) rotates concentrically inside a fixed housing (21), so that the lower wall of the drum does not always receive the flame from the burners (8) at the same area. In this way, the inner metal wall of the drum, normally protected with refractory material, can withstand the heat for long working periods.

The burners (8) located between the inner metal wall of the housing (21) without protection of refractory material and the outer wall direct their flame to the inner wall of the drum (2) that rotates on its axis, so that the heat provided by the burners is applied on it. The wall of the drum with its rotary movement, slowly transmits the heat to the scrap that descends downward forced by the movement of the furnace, slowly towards the exit of the furnace.

In this way, the scrap is heated slowly and the zinc is separated from the rest of the metallic and non-metallic components of the scrap, since the melting temperature of zinc (419.5 °C) would be the first metal to liquefy from the rest of the metals in the scrap.

The slow and indirect heating of the zinc in the scrap makes it liquefy without sublimation. Zinc sublimation is a problem for its recovery from scrap, since in furnaces heated directly with direct flame and at high temperature, such as electric arc furnaces (EAF), in which scrap is recovered by melting at high temperature, the zinc is recovered in the form of powder together with the rest of the steel because it has sublimated due to the action of the electric arc.

For this reason, Coreco furnaces (**Figure 1**) are used to recover zinc directly from the scrap.

One of the main problems with Coreco furnaces is that due to the indirect heating of the scrap and the lack of sufficient temperature inside the furnace, a great deal of Total Organic Carbon (TOC) emissions are generated.

With the temperature, the organic components that accompany the scrap are converted into TOC gases, and leave the furnace through the exit chimney against the current of the scrap. These TOCs are diluted in the air entering the lower part of the furnace (where the liquid zinc and unmelted and unzinced scrap metal are discharged) and flow directly to the chimney without oxidizing, making them a harmful emission that is restricted by authorities.

### DESCRIPTION OF THE INVENTION

The invention is defined in the attached independent claims, and satisfactorily solves the above-described drawbacks of the prior art, by the provision of a rotary furnace for separating non-ferrous metal (in liquid state) from scrap-metal, preferably meant to be implemented in a very specific type of furnace, that is, in a Coreco type furnace.

Conventionally, the rotary furnace comprises a rotary and inclined drum, having an upper end and a lower end, wherein the lower end is open for the input of air into the drum, and for the output of non-molten metal scrap.

A plurality of burners are provided for externally heating the drum to melt scrap metal inside the drum, and the set of burners are placed along the drum as to heat the drum from its upper end to the output.

The rotary furnace is adapted to operate at a melting temperature inside the drum within the range 580 °C - 740 °C, and preferably around 650°C, which is suitable for separating zinc metal from scrap metal.

The rotary furnace further comprises a hopper coupled with the upper end of the drum for feeding metal scrap into an upper part of the drum, and a set of burners for externally heating the drum and for melting metal scrap inside the drum, such that molten metal would flow towards the output of the drum.

Furthermore, an output is provided at a lower part of the drum for the output of molten metal, and a collection duct for evacuating flue gases out of the drum. Preferably, flow regulation means are provided for regulating the flow of flue gases passing through the flue gases collection conduit.

According to the invention, the furnace further comprises a torch or pipe passing through the lower end of the drum and extending longitudinally into the drum interior. The torch has a burner placed a central region of the drum (between ends, and at a similar distance from the upper and lower ends), and above the flow of molten metal circulating toward the lower end of the drum.

The torch's burner is placed downstream a charge of incoming metal scrap at the upper end of the drum, and upstream the output of molten metal.

Therefore, the torch's flame is directed to the charge of raw material loading zone at the upper end of the drum, just when it is solid and the organics contained in the raw material start to gasify, so that fusion rate of raw material is increased. Additionally, the torch's burner position allows to burn more organics, and exhaust gases pass through the pile of charged material in order to preheat the charge of raw material. In this way, the furnace is highly efficient in that it increases the melting rate, thus, increasing production of recycled Zinc.

In a preferred embodiment, the drum is cylindrical, and the torch extends axially into the drum or parallel to the axis of the drum.

A source of a mixture of fuel and gaseous oxidant coupled to the torch for burning the mixture at the torch's burner, such that a counter flow of flue gases (relative to the direction of circulation of the incoming metal scrap) is directed towards the drum's upper end so as to pre-heat the incoming metal scrap, thereby, increasing recovery rate of non-ferrous metal, for example zinc, thus, improving recovery efficiency and revenue in recycling zinc.

The source of mixture of fuel and gaseous oxidant, preferably natural gas and oxygen, is adapted such that the combustion of the mixture at the torch's burner is super stoichiometric reaction, meaning that free oxygen is liberated at the torch's burner for the combustion of organic compounds expelled from the molten scrap metal.

Since the flame generated by the oxy-fuel torch's burner is super stoichiometric, the free oxygen in the vicinity of the flame enables the oxidation of the organic components from the scrap metal inside thew drum, in order to reduce Total Organic Carbon (TOC) emissions and to comply with levels of emissions required by authorities.

Preferably, a door is provided at the lower end of the drum, for closing and opening the same, and the torch pass through an opening of the door.

In a preferred embodiment, the hopper's output generally has the same size and shape of the upper end of the drum, such that the upper end of the drum can be filled up (closed) with scrap metal contained in the hopper.

In a preferred embodiment, the rotary furnace comprises a recirculation conduit fluidly communicating the flue gases collection conduit with the torch, for recirculating flue gases into the drum through the torch.

Another aspect of the invention refers to a method for separating non-ferrous metal from scrap-metal, using the rotary furnace previously defined.

The method comprises the step of forming a charge of scrap metal at the upper end of the drum, that is raw material for the furnace which is solid metal at room temperature, and burning a mixture of fuel and a gaseous oxidant inside the drum, to generate a counter flow of flue gases towards the charge of scrap metal to pre-heat the charge.

Additionally, the method is preferably adapted such that the combustion of the mixture of fuel and a gaseous oxidant, is a stoichiometric reaction, meaning that free oxygen is liberated at the torch's burner for the combustion of organic compounds expelled from the molten scrap metal.

The oxy-fuel flame is produced through an oxygen-fuel burner with super oxygen stoichiometry. The free oxygen after the complete combustion of the fuel used, is available and heated by the temperature of the flame itself, to oxidize the TOCs that are released from the scrap as it is preheated, both by the action of the furnace burners themselves, and by the energy provided by the flame of the oxy-fuel burner, as well as by the energy given off by the oxidation of the TOC compounds that in the gaseous phase react with the stoichiometric excess of oxygen that is made available for the reaction through the oxy-fuel burner.

The oxy-fuel flame does not touch the scrap metal at any time, as this would cause the zinc in the scrap metal to sublime, i.e. to change from a solid to a gaseous state, due to the effect of the high temperature of the oxy-fuel flame directly affecting the scrap metal.

For this reason, the oxy-fuel flame that is made available in the furnace does not touch the scrap, but heats the scrap by convection and radiation, causing the organic compounds present in it to evaporate slowly passing into the atmosphere of the furnace where the free and hot oxygen available from the super stoichiometric flame coming from the oxy-combustion burner reacts with them, oxidizing them and preventing them from coming out of the chimney.

This reduces the TOC emitted into the atmosphere by the Coreco furnace incorporating the oxy-fuel burner.

The invention can be easily retrofitted in any existing rotary furnace of this type.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows a schematic representation of an indirectly heated rotary furnace according to the prior art.
Figure 2.- shows a similar representation than the previous figure, of a modified rotary furnace according to the invention.

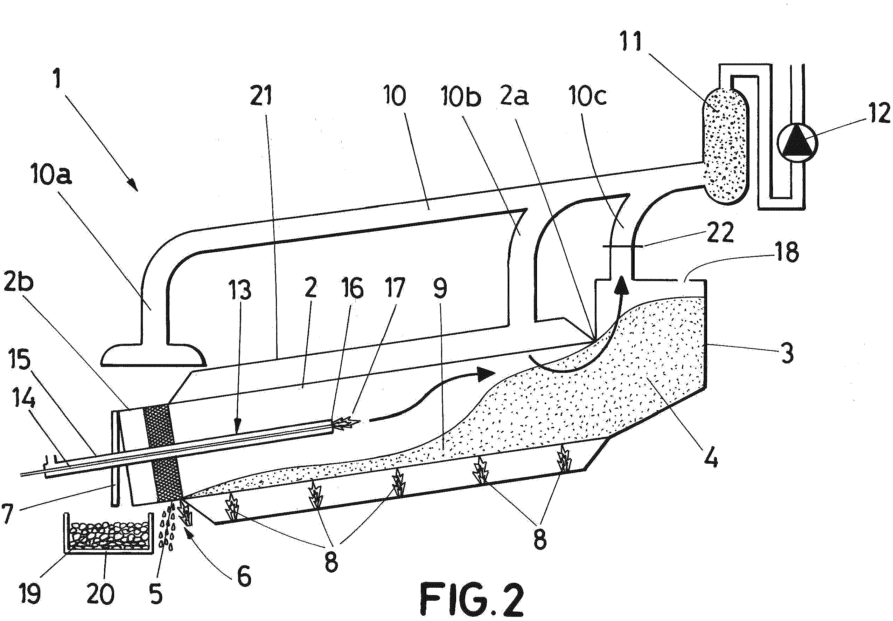

Figure 2.- shows a similar representation than the previous figure, of another preferred implementation of a rotary furnace according to the invention.

### DESCRIPTION OF WAYS OF CARRYING OUT THE INVENTION

**Figure 2** shows a rotary furnace (1) as the one shown in **Figure 1** including all the components and features described for **Figure 1**. According to the invention, the rotary furnace (1) incorporates a torch (13) that comprises a pair of pipes (14) inside a jacket (15) one for the fuel and another one for the oxidant (O₂), and a burner (16) at a free end of pair of pipes (14).

The torch (13) passes through the lower end (2b) of the drum (2), in particular through the door (7), and extends longitudinally into the drum interior. In this preferred embodiment, the drum (2) is cylindrical and the torch (13) is arranged generally axially or parallel to the axis of the drum (2).

The torch's burner (16) is placed a central region of the drum (2), that is, approximately at a middle point between the two ends (2a,2b) of the drum (2), and above the flow of molten metal (9), and downstream the charge (4) of incoming metal scrap at the upper end of the drum from the hoper (3).

The position of the torch's burner (16) is such that the flame (17) is directed towards the charge (4) of metal scrap, in order to generate a counter flow of flue gases (relative to the direction of circulation of the incoming metal scrap) that passes through the charge (4) directed towards the drum's upper end (2a) to pre-heat the charge (4) of cold incoming metal scrap.

As represented in **Figure 2****,** the hopper's output generally has the same size and shape of the upper end (2a) of the drum (2), such that the upper end (2a) of the drum can be filled up with scrap metal contained in the hopper (3), such as shredded zinc plates.

Additionally, the rotary furnace (1) includes a source (not shown) of natural gas and oxygen (oxy-fuel skid control), coupled to the pair of pipes (14) of the torch (13), where the fuel and oxidant are conditioned in terms of flow and pressure to be burned at the burner (16). The amount of oxygen fed to the torch (13), is calculated so that the combustion of the mixture at the torch's burner is super stoichiometric reaction, meaning that free oxygen is liberated at the torch's burner (16), to burn organic compounds expelled from the molten scrap metal (9).

The rotary furnace (1) including the set of burners (8), are adapted to operate at a melting temperature inside the drum within the range 580 °C - 740 °C, and preferably around 650°C. adapted for separating zinc metal from scrap metal.

In the embodiment of **Figure 2****,** the burners (8) are placed along the drum as to heat the drum from its upper end (2a) to the output (5).

The collection duct (10) has three branches, namely a first branch (10a) arranged for collecting hot gases from the output (5), a second branch (10b) coupled to an exterior fixed housing (21) inside which the drum (2) rotates, and a third branch (10c) coupled to the hopper (3) for collecting flue gases from inside the drum (2) after passing through the charge (4) of scrap metal.

A flow regulation means (22), for example a valve, for regulating the flow of flue gases passing through the charge (4), that is to regulate the chimney effect therethrough, is provided at the third branch (10c).

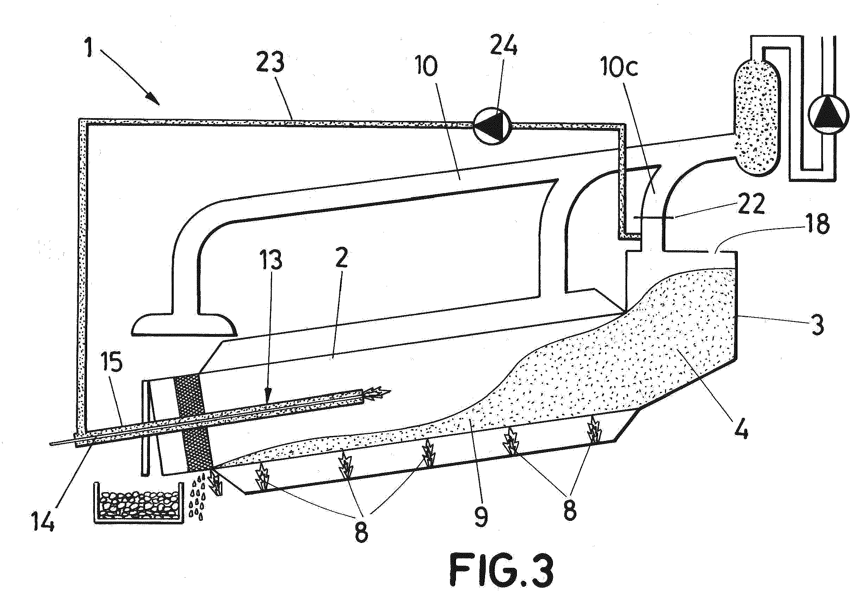

In the preferred embodiment of **Figure 3****,** the rotary furnace (1) incorporates a recirculation conduit (23) fluidly communicating the third branch (10c) of the flue gases collection conduit (10) with the torch (13), for recirculating flue gases into the drum (2) through the torch. In particular, the conduit (23) is coupled to the jacket (15) of the torch (13), and the conduit (23) is coupled to the third branch (10c) upstream the flow regulation means (22). Circulation of gases through the conduit (23), may be assisted by a ventilator or pump (24).

The method of the invention for separating non-ferrous metal from scrap-metal using the rotary furnace previously defined, is also illustrated in **Figure 2** and **3****.**

In the method, a charge (4) of scrap metal is formed at the upper end (2a) of the drum (2), and a mixture of fuel and a gaseous oxidant, such as a mixture of natural gas and oxygen, is burned inside the drum above the flow of molten metal (9) and downstream the charge (4) of scrap metal, to generate a counter flow of flue gases towards the charge (4) of scrap metal to pre-heat the charge (4).

The mixture of fuel and a gaseous oxidant, is adapted in a way the its combustion inside the drum is a stoichiometric reaction, in order to liberate free oxygen is liberated at the torch's burner for the combustion of organic compounds expelled from the molten scrap metal.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A rotary furnace (1) for separating non-ferrous metal from scrap-metal, comprising:
a rotary and inclined drum (2), having an upper end (2a) and a lower end (2b), wherein the lower end (2b) is open for the input of air into the drum (2),
a hopper (3) coupled with the upper end (2a) of the drum (2) for feeding metal scrap into an upper part of the drum (2),
an output (5) at a lower part (2b) of the drum (2) for the output of molten metal (6),
a set of burners (8) for externally heating the drum (2) and for melting metal scrap inside the drum (2),
such that molten metal (9) would flow towards the output (5) of the drum (2),
a collection duct (10) for evacuating flue gases out of the drum (2),
**characterized in that,** the furnace further comprises a torch (13) passing through the lower end (2b) of the drum (2) and extending longitudinally into the drum's interior, the torch (13) having a burner (16) placed a central region of the drum (2),
such that a counter flow of flue gases is directed towards the drum's upper end (2a) so as to pre-heat a charge (4) of incoming metal scrap.

2. A rotary furnace according to claim 1, further comprising a source of a mixture of fuel and gaseous oxidant coupled to the torch (13) for burning the mixture at the torch's burner (16).

3. A rotary furnace according to claim 2, wherein the source of mixture of fuel and gaseous oxidant, is adapted such that the combustion of the mixture at the torch's burner is super stoichiometric reaction, meaning that free oxygen is liberated at the torch's burner for the combustion of organic compounds expelled from the molten scrap metal.

4. A rotary furnace according to any of the preceding claims, wherein drum (2) is cylindrical and the torch (13) extends axially into the drum (2).

5. A rotary furnace according to any of the preceding claims, wherein the torch's burner (16) is placed downstream the charge (4) of incoming metal scrap at the upper end (2a) of the drum (2), and upstream the output (5) for the molten metal (9).

6. A rotary furnace according to any of the preceding claims, wherein the hopper's output generally has the same size and shape of the upper end (2a) of the drum (2), such that the upper end (2a) of the drum (2) can be filled up with scrap metal contained in the hopper (3).

7. A rotary furnace according to any of the claims 2 to 6, wherein the mixture of fuel and gaseous oxidant is a mixture of natural gas and oxygen.

8. A rotary furnace according to any of the preceding claims, adapted to operate at a melting temperature inside the drum (2) within the range 580 °C - 740 °C, and preferably around 650°C. adapted for separating zinc metal from scrap metal

9. A rotary furnace according to any of the preceding claims, further comprising a flow regulation means (22) for regulating the flow of expelled flue gases out of the drum (2).

10. A rotary furnace according to any of the preceding claims, further comprising a recirculation conduit (23) fluidly communicating the flue gases collection conduit (10) with the torch (13), for recirculating flue gases into the drum (2) through the torch (13).

11. A rotary furnace according to any of the preceding claims, further comprising a door (7) for opening and closing the lower end (2b) of the drum (2), and wherein the torch (13) pass through the door (7).

12. A rotary furnace according to any of the preceding claims, further comprising burners (8) for externally heating the drum (2) to melt scrap metal inside the drum, and wherein the set of burners (8) are placed along the drum as to heat the drum from its upper end (2a) to the output (5).

13. Method for separating non-ferrous metal from scrap-metal using the rotary furnace defined in any of the preceding claims, comprising:
forming a charge (4) of scrap metal at the upper end (2a) of the drum (2), and
burning a mixture of fuel and a gaseous oxidant inside the drum, to generate a counter flow of flue gases towards the charge (4) of scrap metal to pre-heat the charge.

14. Method according to claim 13, adapted such that the combustion of the mixture of fuel and a gaseous oxidant, is a stoichiometric reaction, meaning that free oxygen is liberated at the torch's burner for the combustion of organic compounds expelled from the molten scrap metal.
